# EUROPÄISCHE PATENTSCHRIFT

(11) **EP 2 824 369 B1**
(45) Veröffentlichungstag und Bekanntmachung des Hinweises auf die Patenterteilung: **15.06.2016**
(21) Anmeldenummer: 13175678.5
(22) Anmeldetag: 09.07.2013
(51) Int. Cl.: F16J 15/08

(54) **Verfahren zur Herstellung einer Baugruppe**
Method for manufacturing a component
Procédé de fabrication d'un bloc

(43) Veröffentlichungstag der Anmeldung: 14.01.2015
(73) Patentinhaber: ElringKlinger AG, 72581 Dettingen (DE)
(72) Erfinder: Retiere, Alain, 87270 Couzeix (FR); Claveyrollas, Frederic, 87410 le Palais sur Vienne (FR)
(74) Vertreter: Hoeger, Stellrecht & Partner Patentanwälte mbB

(56) Entgegenhaltungen:
- DE-A1- 19 835 848
- DE-A1-102005 007 245

## Beschreibung

Die Erfindung betrifft ein Verfahren zur Herstellung einer Baugruppe aus mehreren aufeinandergestapelten Lagen aus Flachmaterial, insbesondere zur Herstellung einer Flachdichtung aus mehreren Lagen, gebildet aus mit funktionsbedingten Elementen versehenem Flachmaterial, wobei die Lagen zumindest an einzelnen Verbindungsstellen der Baugruppe miteinander verbunden sind.

Derartige Verfahren sind aus dem Stand der Technik bekannt, wie z.B. aus der gattungsgemäßen DE 19835848A.

Bei den üblichen, aus dem Stand der Technik bekannten Verfahren werden die Lagen durch zusätzliche Elemente, wie beispielsweise Nieten oder andere Verbindungselemente oder auch aus den Lagen ausgeformte Elemente, miteinander verbunden.

Die Herstellung derartiger Baugruppen ist jedoch aufwändig und insbesondere mit einem zumindest hohen zeitlichen Fertigungsaufwand verknüpft.

Der Erfindung liegt daher die Aufgabe zugrunde, ein Verfahren der gattungsgemäßen Art derart zu verbessern, dass die Baugruppen möglichst einfach und möglichst effizient, insbesondere mit möglichst kurzen Fertigungszeiten, hergestellt werden können.

Diese Aufgabe wird bei einem Verfahren der eingangs beschriebenen Art erfindungsgemäß durch die Schritte des Anspruchs 1 gelöst.

Der Vorteil der erfindungsgemäßen Lösung ist somit darin zu sehen, dass damit die Möglichkeit besteht, durch ein Aufheizen der Randbereiche ausgehend von den Stirnseiten derselben die Schmelzzone zu erzeugen und durch Erstarren der Schmelzzone eine Verbindungszone zu schaffen, die alle Randbereiche der Lagen miteinander verbindet.

Ein derartiges Schaffen einer Schmelzzone und daraus folgend einer Verbindungszone ist auch besonders effizient und schnell durch schnelle Aufheizprozesse, wie beispielsweise Aufheizprozesse mit energiereicher Strahlung oder energiereichen Teilchen, realisierbar.

Ferner ist ein Vorteil der erfindungsgemäßen Lösung darin zu sehen, dass die Ausbildung der Schmelzzone zur Folge hat, das nichttemperaturstabile Materialien, wie zum Beispiel Elastomerbeschichtungen oder andere eine Abdichtung ermöglichende Beschichtungen, sich bei der Erzeugung der Schmelzzone verflüchtigen, beispielsweise verdampfen oder verbrennen, so dass dadurch keinerlei Gefahr einer Beeinträchtigung des Gefüges der späteren Verbindungszone entsteht.

Um insbesondere die erfindungsgemäße Verbindungszone möglichst rasch herstellen zu können, ist vorzugsweise vorgesehen, die Verbindungszone räumlich zu begrenzen, so dass sich vorzugsweise die Stirnseitenbereiche, in denen sich die Verbindungszone ausbildet, ausgehend von den Stirnseiten der Randbereiche maximal über eine einer doppelten Flachmaterialdicke entsprechende Distanz in die Randbereiche hinein erstrecken.

Dabei ist insbesondere die Flachmaterialdicke des Randbereichs mit der geringsten Dicke heranzuziehen.

Darüber hinaus ist vorzugsweise vorgesehen, dass das Aufheizen der Stirnseiten und der Randbereiche zur Erzeugung der Schmelzzone ohne spontane Materialeruption erreicht wird, das heißt, dass das Aufheizen derart erfolgt, dass keinerlei Funken oder Materialspritzer entstehen, die zu einer Beeinträchtigung von Oberflächen der Baugruppe führen würden.

Insbesondere lässt sich dies dadurch erreichen, dass die Schmelzzone durch eine Materialaufheizung erfolgt, bei welcher eine im Wesentlichen gleichmäßige Energiezufuhr erfolgt, wobei unter einer im Wesentlichen gleichmäßigen Energiezufuhr eine Energiezufuhr zu verstehen ist, bei welcher die zugeführte Leistung um maximal ein Fünftel schwankt.

Hinsichtlich des Materials, aus welchem die Schmelzzone und die daraus resultierende Verbindungszone gebildet wird, wurden bislang keine näheren Angaben gemacht.

So ist vorteilhafterweise vorgesehen, dass bei unterschiedlichen Basismaterialien der verschiedenen Randbereiche sich in der Schmelzzone eine Mischung der erschmolzenen Basismaterialien einstellt.

Dabei ist vorzugsweise vorgesehen, dass das Basismaterial der Randbereiche aus Metall ist.

Darüber hinaus kann die Schmelzzone auch noch Beschichtungsmaterialien der Randbereiche umfassen, insbesondere, wenn die Beschichtungsmaterialien ebenfalls Metalle sind, die beim Erschmelzen des Basismaterials sich nicht verflüchtigen.

Hinsichtlich der Erzeugung der Schmelzzone sind gemäß den eingangs gemachten Angaben mehrere Möglichkeiten denkbar.

Ein derartiger Laserstrahl hat den Vorteil, dass mit diesem eine Aufheizung der Randbereiche im Anschluss an die Stirnseiten in kurzer Zeit möglich ist, ohne dass sich dabei die Schmelzzone und die daraus entstehende Verbindungszone weit in die Randbereiche hineinerstrecken, sondern auf den sehr begrenzten Stirnseitenbereich im Anschluss an die Stirnflächen begrenzt werden kann.

Insbesondere ist dabei vorgesehen, dass mit dem Laserstrahl von außerhalb der Randbereiche des Randstapels kommend die Stirnseiten der Randbereiche zum Erzeugen der Schmelzzone streifend erfasst werden.

Beispielsweise ist dabei vorgesehen, dass mit dem Laserstrahl die Stirnseiten aller Randbereiche der Lagen gleichzeitig erfasst werden, so dass damit gleichzeitig in allen Randbereichen ein Erhitzen mittels des Laserstrahls erfolgt und dadurch die Schmelzzone entsteht.

Diese erfindungsgemäße Lösung lässt sich besonders einfach dann realisieren, wenn im Bereich der Randstapel die Randbereiche so gestaltet werden, dass diese im Wesentlichen in einer gemeinsamen quer zur Flächenausdehnung der Randbereiche verlaufenden geometrischen Randfläche liegende Stirnseiten aufweisen.

Unter der Angabe, dass die Stirnseiten im Wesentlichen in der gemeinsamen Randfläche liegen, ist dabei zu verstehen, dass die Stirnseiten maximal einen Abstand von einem Verlauf der geometrischen Randfläche aufweisen, der kleiner als die Hälfte eines Wirkdurchmessers beim Aufheizen der Randbereiche zur Erzeugung der Schmelzzone ist.

Dieser Wirkdurchmesser ist im Fall eines Aufheizens mit einem Laserstrahl der Fokusdurchmesser des Laserstrahls zum Aufheizen der Randbereiche.

Eine besonders vorteilhafte Lösung zur Erzeugung der Verbindungszone sieht vor, dass die Schmelzzone in einer Auftreffzone des Laserstrahls erzeugt wird und dass die Auftreffzone in einer Richtung parallel zu der Randkontur der Baugruppe bewegt wird.

Damit lässt sich eine Verbindungszone erzeugen, die größer ist als die Schmelzzone die durch das Auftreffen des Laserstrahls in einer der Auftreffzonen entsteht, so dass die Möglichkeit besteht, dass sich die schließlich entstehende Verbindungszone über eine für eine dauerhafte Verbindung vorteilhafte Strecke längs der Randkontur ausdehnt, der gleich oder größer ist als 1 mm und gleich oder kleiner ist als 30 mm, vorzugsweise gleich oder kleiner 20 mm, noch besser gleich oder kleiner 10 mm.

Insbesondere lässt sich eine vorteilhafte Verbindungszone dann erzeugen, wenn die Auftreffzone unter Erzeugung einander überlappender Schmelzzonen kontinuierlich in Richtung parallel zur Randkontur bewegt wird, so dass dadurch schließlich eine in sich zusammenhängende Verbindungszone entsteht, die sich über eine definierbare Strecke längs der Randkontur der Baugruppe erstreckt.

Hinsichtlich der Anordnung der Verbindungszonen an der Baugruppe wurden bislang keinerlei näheren Angaben gemacht.

So wäre es theoretisch ausreichend, die Lagen der Baugruppe durch eine einzige Verbindungszone miteinander zu verbinden.

Eine besonders günstige Lösung sieht jedoch vor, dass die Lagen der Baugruppe durch mehrere Verbindungszonen miteinander verbunden werden, die vorzugsweise im Abstand voneinander angeordnet werden.

Eine vorteilhafte Lösung sieht beispielsweise vor, dass die Verbindungszonen an einander gegenüberliegenden Seiten der Baugruppe angeordnet werden.

Um eine für die Handhabung der Baugruppe günstige Verbindung der Lagen zu schaffen ist vorzugsweise vorzugsweise vorgesehen, dass die Lagen der Baugruppe durch mindestens drei Verbindungsbereiche miteinander verbunden werden.

Vorzugsweise ist dabei vorgesehen, dass Verbindungsbereiche nur bei an einer Außenkontur der Baugruppe liegenden Randstapeln gebildet werden.

Alternativ dazu wäre es aber auch denkbar, erfindungsgemäße Verbindungsbereiche an in einem Innenbereich der Baugruppe, beispielsweise an Druckbereichen, liegenden Randstapeln vorzusehen.

Um zu vermeiden, dass der sich ausbildende Verbindungsbereich die Funktion der Baugruppe beeinträchtigt, ist vorzugsweise vorgesehen, dass das Erzeugen des Verbindungsbereichs nur in Randstapeln erfolgt, die in der Stapelrichtung eine geringere Höhe aufweisen als ein Funktionsbereich der Baugruppe.

Damit besteht die Möglichkeit, dass selbst ein Überstehen des Verbindungsbereichs über eine der Flachseiten des Randstapels die spätere Funktion der Baugruppe nicht beeinträchtigt.

Besonders vorteilhaft ist es ebenfalls, wenn der Ausbildung des Verbindungsbereichs nur in einem Randstapel erfolgt, welcher außerhalb eines Funktionsbereichs der Baugruppe liegt, so dass auch damit keinerlei Beeinträchtigung des Funktionsbereichs der Baugruppe durch den sich ausbildenden Verbindungsbereich erfolgen kann.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine schematische Darstellung einer erfindungsgemäßen Baugruppe in Form einer Flachdichtung mit erfindungsgemäß angeordneten Verbindungsbereichen;
- Fig. 2: einen Schnitt längs Linie 2-2 in Fig. 1 vor Ausbildung eines Verbindungsbereichs;
- Fig. 3: einen Schnitt ähnlich Fig. 2 mit schematischer Darstellung einer erfindungsgemäß erzeugten Schmelzzone;
- Fig. 4: eine Darstellung ähnlich Fig. 2 mit einem erfindungsgemäß ausgebildeten Verbindungsbereich;
- Fig. 5: eine schematische Darstellung einer Anordnung der Baugruppe beim Erzeugen der Schmelzzone zur Ausbildung des Verbindungsbereichs an mehreren Stellen und
- Fig. 6: eine vergrößerte Darstellung eines Bereichs A in Fig. 5.

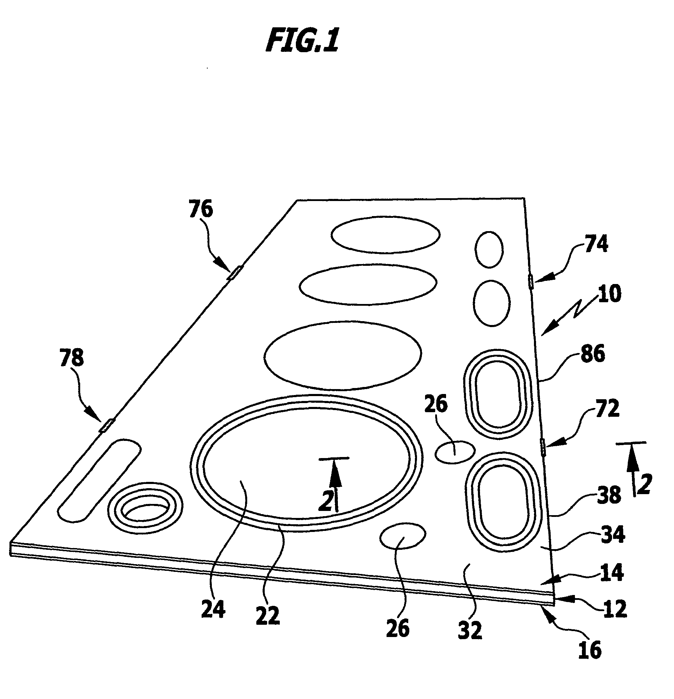

Ein in Fig. 1 dargestelltes Ausführungsbeispiel einer Baugruppe aus mehreren aufeinandergestapelten Elementen aus Flachmaterial, insbesondere einer Flachdichtung 10, umfasst mehrere aufeinander gestapelte Lagen 12, 14, 16, wobei beispielsweise die Lage 12 eine Trägerlage darstellt, während die Lagen 14 und 16 Funktionslagen darstellen, die angeformte oder eingeformte Funktionselemente, wie beispielsweise Abdichtbereiche 22, aufweisen, die Durchbrüche 24 in der Flachdichtung 10 umschließen und um die Durchbrüche 24 herum eine Abdichtung zwischen der Trägerlage 12 und einem auf die jeweilige Funktionslage 14, 16 aufliegenden Teil herstellen, oder wie beispielsweise Abstützbereiche 26, welche ein übermäßig starkes Verpressen der Abdichtbereiche 24 verhindern.

Sowohl die Abdichtbereiche 22 als auch die Stützbereiche 24 erheben sich in der Regel über eine Flachmaterialbasis 32 der jeweiligen Funktionslage 14, 16, während die Flachmaterialbasis 32 der jeweiligen Funktionslage 14, 16 zumindest in einem Randbereich 34 der Flachdichtung 10 flächenhaft auf der Trägerlage 12 aufliegt.

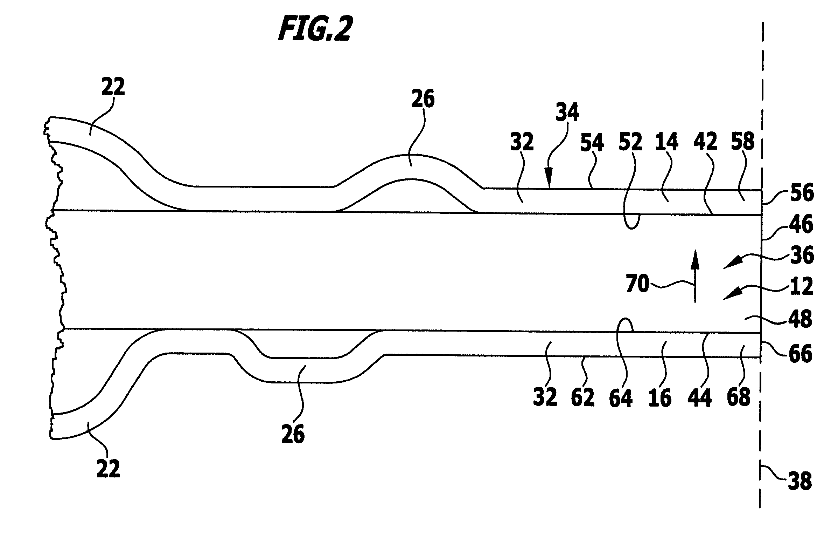

Somit bildet sich, wie in Fig. 2 dargestellt am jeweiligen Randbereich 34 der Flachdichtung 10 ein sogenannter Randstapel 36, in welchem auf einander gegenüberliegenden Flachseiten 42 und 44 der Trägerlage 12 die obere Funktionslage 14 mit einer Flachseite 52 und die untere Funktionslage 16 mit einer Flachseite 64 anliegt, während die jeweils gegenüberliegende Flachseite 54 bzw. 62 der Trägerlage 12 abgewandt ist.

Somit liegen in dem jeweiligen Randstapel 36 die Lagen 16, 12, und 14 in einer Stapelrichtung 70 übereinander.

Ferner liegen eine Stirnseite 46 der Trägerlage 12, eine Stirnseite 56 der Funktionslage 14 und eine Stirnseite 66 der Funktionslage 16 im Wesentlichen in einer gemeinsamen Randfläche 38 der Flachdichtung 10, welche beispielsweise die Flachdichtung 10 umfangsseitig umgibt.

Zur erfindungsgemäßen Herstellung der Flachdichtung 10 sind die verschiedenen, voneinander getrennt hergestellten, Lagen 12, 14 und 16 miteinander zu verbinden.

Hierzu sind, wie in Fig. 12 dargestellt, mehrere Verbindungsstellen 72, 74, 76, 78 vorgesehen, wobei die Verbindungsstellen 72, 74, 76, 78 einerseits beispielsweise auf einander gegenüberliegenden Seiten der Flachdichtung 10 liegen und andererseits insoweit, als sie auf derselben Seite liegen wie die Verbindungsstellen 72 und 74 sowie 76 und 78, im Abstand von einander angeordnet sind.

Ferner werden die Verbindungsstellen 72, 74, 76, 78 so positioniert, dass sie außerhalb von Funktionselementen 22, 24, 26, aufweisenden Funktionsbereichen 80 liegen.

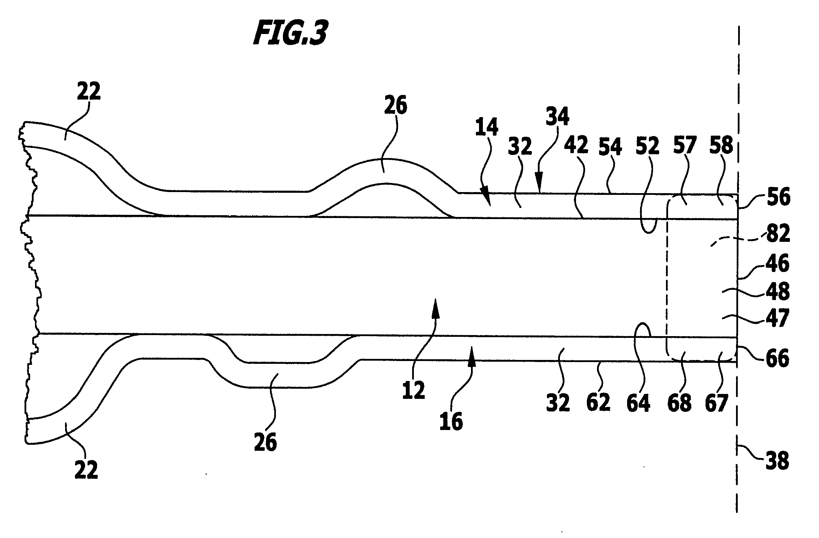

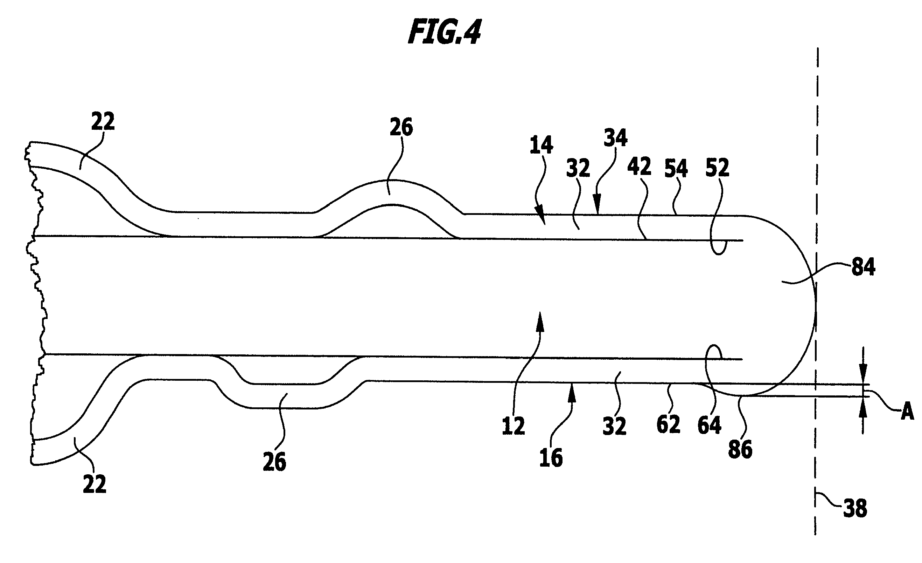

An den Verbindungsstellen 72, 74, 76, 78 erfolgt, wie in Fig. 3 dargestellt, ein Verbinden der jeweiligen Lagen 12, 14, 16 miteinander, wobei jeweils in einem sich an die jeweiligen Stirnseite 46, 56, 66 der Lagen 12, 14, 16 anschließenden Stirnseitenbereichen 46, 57, 67, der Randbereiche 48, 58, 68 der jeweiligen Lagen 12 bzw. 14 bzw. 16 ein Erschmelzen eines Basismaterials der jeweiligen Lage 12, 14, 16 dergestalt erfolgt, dass sich, wie in Fig. 3 dargestellt, eine insgesamt zusammenhängende Schmelzzone 82 ergibt, welche sich ausgehend von den Stirnseiten 46, 56, 66 der Lagen 12, 14, 16 über die Randbereiche 48, 58 und 68 der verschiedenen Lagen 12, 14, 16 ausdehnt und nach einem Erkalten zu einer in Fig. 4 dargestellten Verbindungszone 84, umfassend mindestens das erkaltete Basismaterial der Lagen 12, 14, 16, führt, die die Lagen 12, 14, 16 dauerhaft und stabil miteinander verbindet.

Wie bereits erwähnt, umfasst die Schmelzzone 82 beim Erhitzen der Randbereiche 48, 58, 68 das Basismaterial der verschiedenen Lagen 12, 14, 16, wobei dieses Basismaterial ein Metall, vorzugsweise Stahl, ist, während andere Materialien, die gegebenenfalls von den Lagen 12, 14, 16 mitumfasst sein können, wie beispielsweise die verschiedensten Beschichtungen der Lagen 12, 14, 16 beim Erzeugen der Schmelzzone 82 insoweit, als sie nicht temperaturbeständig verbrennen oder verdampfen, insoweit, als es sich um metallische oder keramische Anteile handelt, als für die Funktion der Schmelzzone 82 und der Verbindungszone 84, dargestellt in Fig. 4, unwesentliche Elemente mit in die Schmelzzone 82 und die daraus entstehende Verbindungszone 84 integriert werden.

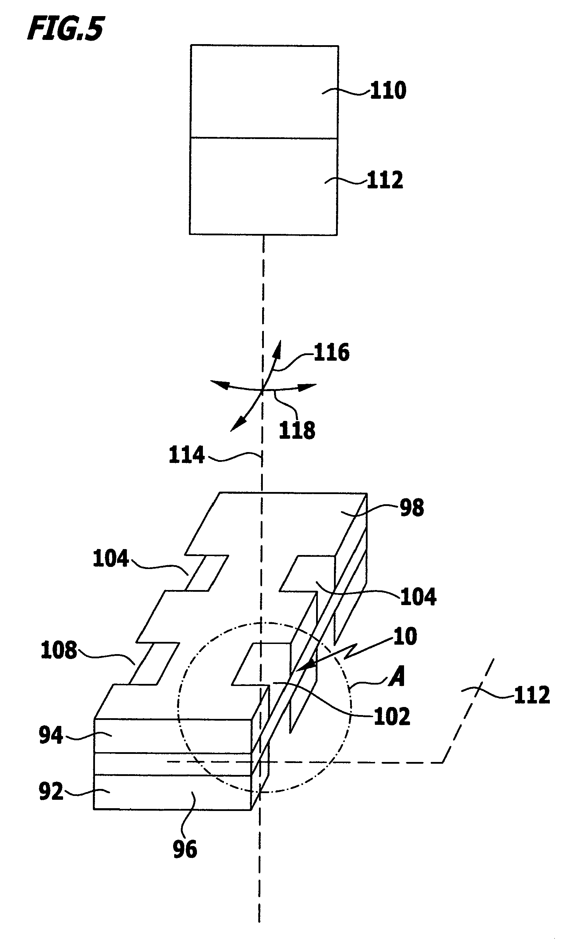

Zur Erzeugung der Schmelzzone 82 an den verschiedenen Verbindungsstellen 72, 74, 76, 78 der erfindungsgemäßen Flachdichtung 10 werden, wie in Fig. 5 dargestellt, die die Flachdichtung 10 bildenden Lagen 12, 14, 16 in ihrer einer Endposition in der Flachdichtung 10 entsprechenden Ausrichtung zueinander zwischen zwei Halteelemente 92, 94 eingespannt, wobei die Halteelemente 92, 94 beispielsweise als einer Außenkontur 86 der Flachdichtung 10 angepasste Halteplatten 96, 98 ausgebildet sind, die an den Stellen, an denen die Verbindungsstellen 72, 74, 76, 78 entstehen sollen, durch Ausschnitte 102, 104, 106, 108 relativ zur Außenkontur 86 zurückgesetzt sind und somit im Bereich der zu erzeugenden Verbindungsstellen 72, 74, 76, 78 den jeweiligen Randstapel 36 freigeben.

Zum Erzeugen der Schmelzzone 82 ist eine Laserstrahlungsquelle 110 vorgesehen, welche beispielsweise mit einer Ablenkeinheit 112 gekoppelt ist, die es erlaubt, einen aus der Ablenkeinheit 112 austretenden Laserstrahl 114 in orthogonal zueinander verlaufenden Schwenkrichtungen 116, 118 im Raum zu schwenken.

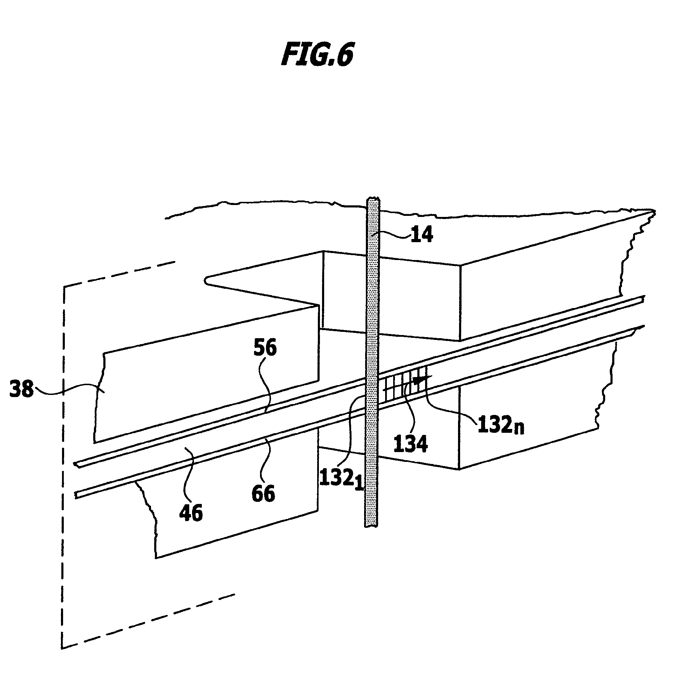

Die Ablenkeinheit 110 ist dabei in einem Abstand A über einer Ausrichtebene 122 angeordnet, parallel zu welcher die Lagen 12, 14, 16 durch die Halteelemente 92, 94 ausgerichtet gehalten werden, so dass der Laserstrahl 14, wie in Fig. 6 dargestellt, mit einer quer zur Ausrichtebene 122 verlaufenden und einer zu der Randfläche 38 ungefähr parallelen oder einen Winkel bis zu maximal 30° zur Randfläche 38 aufweisenden Ausrichtung und somit auch einer Ausrichtung zu den Stirnseiten 46, 56, 66 in einem diesem Winkelbereich entsprechenden Winkel streifend die Stirnseiten 46, 56, 66 beaufschlagen kann, um zunächst in einer ersten Auftreffzone 132 die Schmelzzone 62 zu erzeugen und dann sich parallel zu der Außenkontur 86 in einer Richtung 134 bewegend weitere aufeinanderfolgende und miteinander überlappende Auftreffzonen 132 bis zur Auftreffzone 132ₙ zu erzeugen, so dass die Summe aller miteinander überlappenden Auftreffzonen 132₁ bis 312ₙ insgesamt nach dem Erkalten zur Verbindungszone 84 wird, wie sie in Fig. 4 dargestellt ist, und diese Verbindungszone 84 sämtliche Lagen 12, 14 und 16 dauerhaft miteinander verbindet.

Dabei kann die Verbindungszone 84 in der Art entstehen, dass diese aufgrund der auf die Schmelzzone 82 einwirkenden Schwerkraft eine in Schwerkraftrichtung unten liegende Seite 86 aufweist, die sich über eine der Trägerlage 12 gegenüberliegende Seite, beispielsweise über die Flachseite 62 der Lage 16 erhebt.

Dies stört jedoch die Funktion der erfindungsgemäßen Flachdichtung 10 so lange nicht, so lange deren Abstand A von der die untere Flachseite 62 darstellenden Unterseite des Randstapels 36 geringer ist als die Höhe der Funktionselemente 22, 24, 26 auf der jeweiligen Unterseite, wobei dies im in Fig. 4 dargestellten Ausführungsbeispiel die Funktionselemente 26 und 22 der Funktionslage 16 sind.

Nach dem Aushärten der Schmelzzone 82 zur jeweiligen Verbindungszone 84 werden die Halteelemente 92, 94 entfernt und es liegt nun die erfindungsgemäße Flachdichtung 10 vor, bei welcher alle Lagen 12, 14, 16 durch die Verbindungszone 84 miteinander verbunden sind.

Bei der erfindungsgemäßen Lösung kann dabei der jeweilige Randbereich 34 ein außenliegender Randbereich der Flachdichtung 10 sein, es ist aber durchaus auch denkbar, als Randbereich 34, in welchem eine Verbindung mittels einer Verbindungszone 84 erfolgt, einen innenliegenden Randbereich, beispielsweise an einem innenliegenden Durchbruch 24, vorzusehen.

## Patentansprüche

1. Verfahren zur Herstellung einer Baugruppe (10) aus mehreren aufeinandergestapelten Lagen (12, 14, 16) aus Flachmaterial, insbesondere zur Herstellung einer Flachdichtung (10) aus mehreren Lagen (12, 14, 16), gebildet aus mit funktionsbedingten Elementen (22, 24, 26) versehenem Flachmaterial, wobei die Lagen (12, 14, 16) zumindest an einzelnen Verbindungsstellen (72, 74, 76, 78) der Baugruppe (10) miteinander verbunden sind, wobei die Lagen (12, 14, 16) in der Baugruppe (10) derart angeordnet werden, dass diese zumindest im Bereich einzelner Verbindungsstellen (72, 74, 76, 78) der Baugruppe (10) Randstapel (36) bilden, in denen Randbereiche (48, 58, 68) der Lagen (12. 14, 16) in einer Stapelrichtung (70) aufeinanderfolgend aufeinanderliegen und sich bis zu in der Stapelrichtung (70) aufeinanderfolgend angeordneten Stirnseiten (46, 56, 66) erstrecken, wobei die Stirnseiten (46, 56, 66) relativ zueinander derart angeordnet werden, dass diese innerhalb einer zu erzeugenden und auf einen Stirnseitenbereich (47, 57, 67) der Randbereiche (48, 58, 68) begrenzten Schmelzzone (82) liegen, wobei die alle Stirnseiten (46, 56, 66) der Randbereiche (48, 58, 68) des Randstapels (36) umfassende Schmelzzone (82) durch Beaufschlagung der Randbereiche (48, 58, 68) mit Energie erzeugt wird und durch Erstarren der Schmelzzone (82) eine die Randbereiche (48, 58, 68) aller Lagen (12, 14, 16) des Randstapels (36) miteinander verbindende Verbindungszone (84) geschaffen wird,
**dadurch gekennzeichnet,** dassdieSchmelzzone(82) ein Basismaterial der Randbereiche (48, 58, 68) im erschmolzenen Zustand umfasst, dass die Schmelzzone (82) durch einen Laserstrahl (114) erzeugt wird und dass die Schmelzzone (82) durch einen Laserstrahl (114) erzeugt wird, der quer zur Flächenausdehnung der Randbereiche (48, 58, 68) verläuft.

2. Verfahren nach Anspruch 1, **dadurch gekennzeichnet, dass** sich die Verbindungszone (84) ausgehend von den Stirnseiten (46, 56, 66) der Randbereiche (48, 58, 68) maximal über eine einer Flachmaterialdicke entsprechende Distanz in die Randbereiche (48, 58, 68) hineinerstreckt.

3. Verfahren nach Anspruch 1 oder 2, **dadurch gekennzeichnet, dass** der Laserstrahl (114) von außerhalb der Randbereiche (48, 58, 68) des Randstapels (36) kommend die Stirnseiten (46, 56. 66) der Randbereiche (48, 58, 68) zum Erzeugen der Schmelzzone (82) streifend erfasst werden.

4. Verfahren nach einem der voranstehenden Ansprüche, **dadurch gekennzeichnet, dass** mit dem Laserstrahl (114) die Stirnseiten (46, 56, 66) aller Randbereiche (48, 58, 68) der Lagen (12, 14, 16) gleichzeitig erfasst werden.

5. Verfahren nach einem der voranstehenden Ansprüche, **dadurch gekennzeichnet, dass** im Bereich der Randstapel (36) die Randbereiche (48, 58, 68) so gestaltet werden, dass diese im Wesentlichen in einer gemeinsamen, quer zur Flächenausdehnung der Randbereiche (48, 58, 68) verlaufenden Randfläche (38) liegende Stirnseiten (46, 56, 66) aufweisen.

6. Verfahren nach einem der voranstehenden Ansprüche, **dadurch gekennzeichnet, dass** die Schmelzzone (82) in einer Auftreffzone (132) des Laserstrahls (114) erzeugt wird und dass die Auftreffzone (132) in einer Richtung (134) parallel zu der Randkontur (70) der Baugruppe (10) bewegt wird.

7. Verfahren nach Anspruch 6, **dadurch gekennzeichnet, dass** die Auftreffzone (132) und Erzeugung einander überlappender Schmelzzonen (82) kontinuierlich in Richtung (134) parallel zur Randkontur (70) bewegt wird.

8. Verfahren nach einem der voranstehenden Ansprüche, **dadurch gekennzeichnet, dass** die Lagen (12, 14, 16) der Baugruppe (10) durch mehrere Verbindungszonen (84) miteinander verbunden werden.

9. Verfahren nach einem der voranstehenden Ansprüche, **dadurch gekennzeichnet, dass** die Verbindungszonen (84) an einander gegenüberliegenden Seiten der Baugruppe (10) angeordnet werden.

10. Verfahren nach einem der voranstehenden Ansprüche, **dadurch gekennzeichnet, dass** die Lagen (12, 14, 16) der Baugruppe (10) durch mindestens drei Verbindungsbereiche (84) miteinander verbunden werden.

11. Verfahren nach einem der voranstehenden Ansprüche, **dadurch gekennzeichnet, dass** das Erzeugen des Verbindungsbereichs (84) nur in Randstapeln (36) erfolgt, die in der Stapelrichtung (70) eine geringere Höhe aufweisen als ein Funktionsbereich (80) der Baugruppe (10).

12. Verfahren nach einem der voranstehenden Ansprüche, **dadurch gekennzeichnet, dass** die Ausbildung des Verbindungsbereichs (84) nur in einem Randstapel (36) erfolgt, welcher außerhalb eines Funktionsbereichs (80) der Baugruppe (10) liegt.

## Claims

1. Method of manufacturing a component (10) from several layers (12, 14, 16) stacked on top of one another and consisting of flat material, in particular for the manufacture of a flat seal (10) consisting of several layers (12, 14, 16), formed from a flat material provided with functional elements (22, 24, 26), wherein the layers (12, 14, 16) are connected to one another at least at individual connection points (72, 74, 76, 78) of the component, wherein the layers (12, 14, 16) in the component (10) are arranged in such a manner that they form edge stacks (36) at least in the area of individual connection points (72, 74, 76, 78) of the component (10), edge areas (48, 58, 68) of the layers (12, 14, 16) in said edge stacks being placed consecutively one on top of the other in a stacking direction (70) and extending as far as end sides (46, 56, 66) arranged so as to follow one another in the stacking direction (70), wherein the end sides (46, 56, 66) are arranged relative to one another in such a manner that they are located within a melting zone (82) to be generated and limited to one end side area (47, 57, 67) of the edge areas (48, 58, 68), wherein the melting zone (82) comprising all the end sides (46, 56, 66) of the edge areas (48, 58, 68) of the edge stack (36) is generated by acting on the edge areas (48, 58, 68) with energy and a connecting zone (84) connecting the edge areas (48, 58, 68) of all the layers (12, 14, 16) of the edge stack (36) with one another is created as a result of hardening of the melting zone (82),
**characterized in that** the melting zone (82) comprises a basic material of the edge areas (48, 58, 68) in the molten state, that the melting zone (82) is generated by means of a laser beam (114) and that the melting zone (82) is generated by means of a laser beam (114) extending transversely to the areal extension of the edge areas (48, 58, 68).

2. Method as defined in claim 1, **characterized in that** the connecting zone (84) extends into the edge areas (48, 58, 68), proceeding from the end sides (46, 56, 66) of the edge areas (48, 58, 68), at the most over a distance corresponding to a thickness of the flat material.

3. Method as defined in claim 1 or 2, **characterized in that** coming from outside the edge areas (48, 58, 68) of the edge stack (36) the laser beam (114) lightly touches the end sides (46, 56, 66) of the edge areas (48, 58, 68) in order to generate the melting zone (82).

4. Method as defined in any one of the preceding claims, **characterized in that** the laser beam (114) touches the end sides (46, 56, 66) of all the edge areas (48, 58, 68) of the layers (12, 14, 16) at the same time.

5. Method as defined in any one of the preceding claims, **characterized in that** in the region of the edge stacks (36) the edge areas (48, 58, 68) are configured such that they have end sides (46, 56, 66) located essentially in a common edge surface (38) extending transversely to the areal extension of the edge areas (48, 58, 68).

6. Method as defined in any one of the preceding claims, **characterized in that** the melting zone (82) is generated in an impact zone (132) of the laser beam (114) and that the impact zone (132) is moved in a direction (134) parallel to the edge contour (70) of the component (10).

7. Method as defined in claim 6, **characterized in that** the impact zone (132) is moved continuously in a direction (134) parallel to the edge contour (70) thereby generating melting zones (82) overlapping one another.

8. Method as defined in any one of the preceding claims, **characterized in that** the layers (12, 14, 16) of the component (10) are connected to one another by several connecting zones (84).

9. Method as defined in any one of the preceding claims, **characterized in that** the connecting zones (84) are arranged on sides of the component (10) located opposite one another.

10. Method as defined in any one of the preceding claims, **characterized in that** the layers (12, 14, 16) of the component (10) are connected to one another by at least three connecting areas (84).

11. Method as defined in any one of the preceding claims, **characterized in that** the connecting area (84) is generated only in edge stacks (36) having a lower height in the stacking direction (70) than a functional area (80) of the component (10).

12. Method as defined in any one of the preceding claims, **characterized in that** the connecting area (84) is formed only in an edge stack (36) located outside a functional area (80) of the component (10).

## Revendications

1. Procédé de fabrication d'un assemblage (10) constitué de plusieurs couches (12, 14, 16) en matériau plat superposées les unes sur les autres, en particulier pour la fabrication d'un joint plat (10) composé de plusieurs couches (12, 14, 16), formé à partir de matériau plat pourvu d'éléments fonctionnels (22, 24, 26), les couches (12, 14, 16) étant raccordées au moins sur différents points de connexion (72, 74, 76, 78) de l'assemblage (10), les couches (12, 14, 16) étant agencées dans l'assemblage (10) de manière à former des empilements de bord (36) au moins au niveau de différents points de connexion (72, 74, 76, 78) de l'assemblage (10), où des zones de bord (48, 58, 68) des couches (12, 14, 16) sont superposées successivement dans une direction d'empilement (70) et s'étendent jusqu'à des faces frontales (46, 56, 66) disposées successivement dans la direction d'empilement (70), les faces frontales (46, 56, 66) étant agencées les unes par rapport aux autres de manière à être situées à l'intérieur d'une zone de fusion (82) à générer et délimitée sur une partie de face frontale (47, 57, 67) des zones de bord (48, 58, 68), la zone de fusion (82) comprenant toutes les faces frontales (46, 56, 66) des zones de bord (48, 58, 68) de l'empilement de bord (36) étant générée par application d'énergie sur les zones de bord (48, 58, 68) et une zone de connexion (84) raccordant entre elles les zones de bord (48, 58, 68) de toutes les couches (12, 14, 16) de l'empilement de bord (36) étant créée par solidification de la zone de fusion (82),
**caractérisé en ce que** la zone de fusion (82) comprend un matériau de base des zones de bord (48, 58, 68) en état de fusion, et **en ce que** la zone de fusion (82) est générée par un faisceau laser (114) qui s'étend transversalement à l'extension surfacique des zones de bord (48, 58, 68).

2. Procédé selon la revendication 1, **caractérisé en ce que** la zone de connexion (84) s'étend vers l'intérieur des zones de bord (48, 58, 68) au plus sur une distance correspondant à l'épaisseur du matériau plat depuis les faces frontales (46, 56, 66) des zones de bord (48, 58, 68).

3. Procédé selon la revendication 1 ou la revendication 2, **caractérisé en ce que** le faisceau laser (114) venant de l'extérieur des zones de bord (48, 58, 68) de l'empilement de bord (36) détecte par balayage les faces frontales (46, 56, 66) des zones de bord (48, 58, 68) pour la génération de la zone de fusion (82).

4. Procédé selon l'une des revendications précédentes, **caractérisé en ce que** les faces frontales (46, 56, 66) de toutes les zones de bord (48, 58, 68) des couches (12, 14, 16) sont simultanément détectées par le faisceau laser (114).

5. Procédé selon l'une des revendications précédentes, **caractérisé en ce qu'**au niveau de l'empilement de bord (36), les zones de bord (48, 58, 68) sont configurées de manière à présenter des faces frontales (46, 56, 66) situées sensiblement dans une surface de bord (38) commune, s'étendant transversalement à l'extension surfacique des zones de bord (48, 58, 68).

6. Procédé selon l'une des revendications précédentes, **caractérisé en ce que** la zone de fusion (82) est générée dans une zone d'incidence (132) du faisceau laser (114), et **en ce que** la zone d'incidence (132) est déplacée dans une direction (134) parallèle au contour de bord (70) de l'assemblage (10).

7. Procédé selon la revendication 6, **caractérisé en ce que** la zone d'incidence (132) est déplacée de manière continue dans une direction (134) parallèle au contour de bord (70) pour la génération de zones de fusion (82) se chevauchant l'une l'autre.

8. Procédé selon l'une des revendications précédentes, **caractérisé en ce que** les couches (12, 14, 16) de l'assemblage (10) sont raccordées entre elles par plusieurs zones de connexion (84).

9. Procédé selon l'une des revendications précédentes, **caractérisé en ce que** les zones de connexion (84) sont disposées sur des côtés opposés de l'assemblage (10).

10. Procédé selon l'une des revendications précédentes, **caractérisé en ce que** les couches (12, 14, 16) de l'assemblage (10) sont raccordées entre elles par au moins trois zones de connexion (84).

11. Procédé selon l'une des revendications précédentes, **caractérisé en ce que** la zone de connexion (84) n'est générée que dans des empilements de bord (36) qui présentent une hauteur inférieure à une zone fonctionnelle (80) de l'assemblage (10) dans la direction d'empilement (70).

12. Procédé selon l'une des revendications précédentes, **caractérisé en ce que** la zone de connexion (84) n'est formée que dans un empilement de bord (36) situé en dehors d'une zone fonctionnelle (80) de l'assemblage (10).
